# EUROPEAN PATENT APPLICATION

(11) **EP 4 746 154 A1**
(43) Date of publication of application: **20.05.2026**
(21) Application number: 24904195.5
(22) Date of filing: 06.12.2024
(51) Int. Cl.: H01M 50/244, H01M 50/271, H01M 10/655, H01M 50/595, H01M 10/6551, H01M 50/591

(54) **BATTERY PACK**

(30) Priority: 11.12.2023 KR 20230178456; 23.10.2024 KR 20240146032
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR)
(74) Representative: Plasseraud IP
(86) International application number: PCT/KR2024/020001
(87) International publication number: WO 2025/127630

(57) **Abstract**

Embodiments provide a battery pack. The battery pack includes a pack housing including a base plate, a battery cell assembly provided on the pack housing and including a plurality of battery cells, a thermal interface material (TIM) layer between the battery cell assembly and the pack housing, and a tape between the TIM layer and the pack housing.

## Description

### [Technical Field]

The present invention relates to a battery pack. The present application claims the benefit of priority based on Korean Patent Application No. 10-2023-0178456, filed on December 11, 2023 and Korean Patent Application No. 10-2024-0146032, filed on October 23, 2024, and the entire contents of the Korean patent applications are incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a battery pack for which after-sales services are available.

### [Technical Solution]

Embodiments of the present invention provide a battery pack. The battery pack includes a pack housing including a base plate, a battery cell assembly provided on the pack housing and including a plurality of battery cells, a thermal interface material (TIM) layer between the battery cell assembly and the pack housing, and a tape between the TIM layer and the pack housing.

The pack housing may include a lower side wall protruding from the base plate, and a height of the lower side wall may be less than a height of the battery cell assembly.

The lower side wall may include an inclined surface oblique to a mounting surface of the base plate.

The inclined surface may face the battery cell assembly.

The battery pack may further include a lid plate covering the battery cell assembly, and the lid plate may include an upper side wall facing the lower side wall.

A height of the upper side wall may be greater than the height of the lower side wall.

The battery pack may further include a lid plate covering the battery cell assembly, and the lid plate may include an upper side wall facing the base plate.

A height of the upper side wall may be less than the height of the battery cell assembly.

The tape may cover the base plate.

The tape may be in contact with each of the base plate and the TIM layer.

The TIM layer may be spaced apart from the bae plate.

The battery cell assembly may include a cell block including a plurality of battery cells, and cross-beams spaced apart from each other with the cell block interposed therebetween.

The cross-beams may be symmetrical to the cell block.

Each of the cross-beams may include a stepped structure.

### [Advantageous Effects]

According to embodiments of the present invention, a battery pack includes a tape between a thermal interface material (TIM) layer and a base plate. By stretching the tape, the adhesion of the TIM layer can be removed and some of battery cells in which a quality issue occurs can be separated and replaced with others.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### [Brief Description of the Drawings]

FIG. 1 is a plan view of a battery pack according to embodiments.
FIG. 2 is a cross-sectional view taken along line 1I-1I' of FIG. 1.
FIG. 3 is a cross-sectional view taken along line 1II-1II' of FIG. 1.
FIG. 4 is a diagram for describing a method according to embodiments.
FIG. 5 is a cross-sectional view for describing a method according to embodiments.
FIG. 6 is a cross-sectional view for describing a battery pack according to other embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

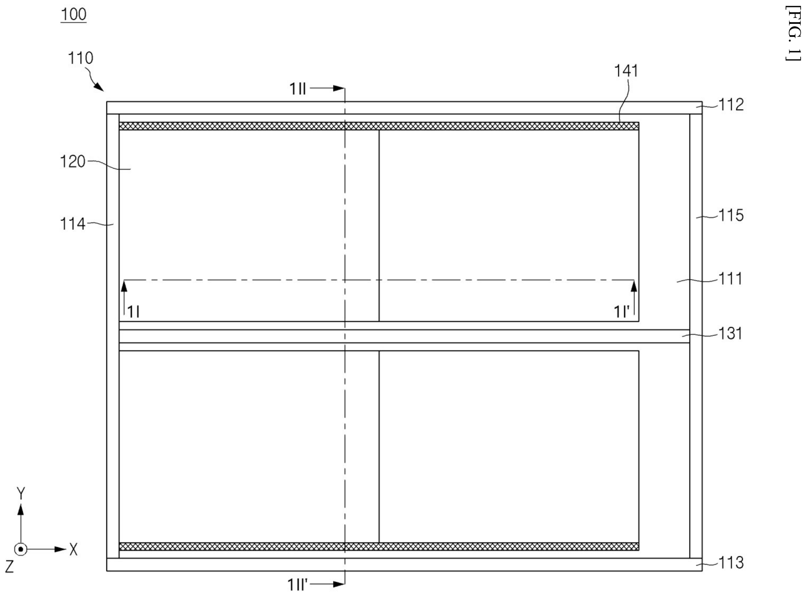

FIG. 1 is a plan view of a battery pack 100 according to embodiments.

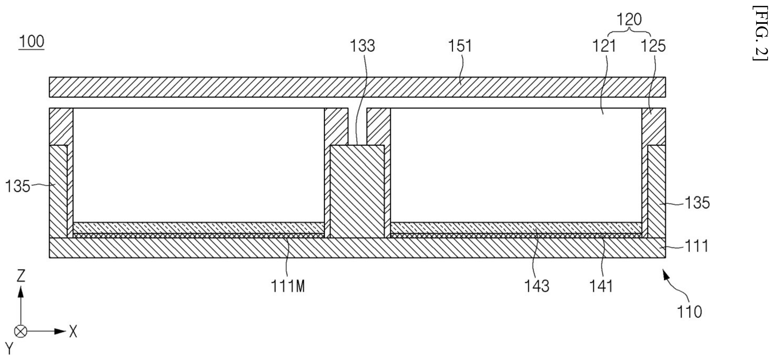

FIG. 2 is a cross-sectional view taken along line 1I-1I' of FIG. 1.

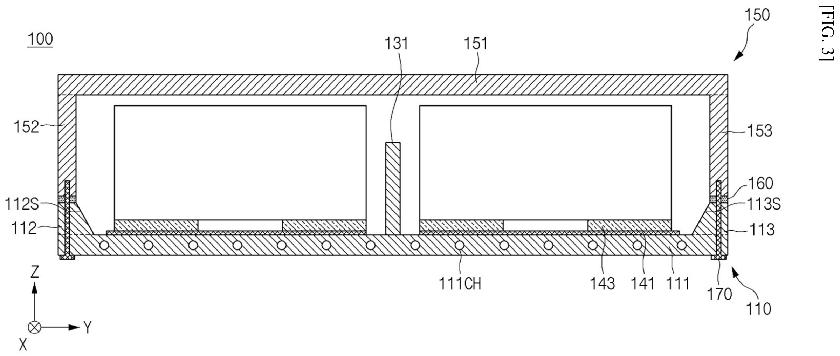

FIG. 3 is a cross-sectional view taken along line 1II-1II' of FIG. 1.

Referring to FIGS. 1 and 2, the battery pack 100 may include a pack housing 110, a plurality of battery cell assemblies 120, a center beam 131, supporting beams 133 and 135, tapes 141, thermal interface material (TIM) layers 143, a lid 150, a gasket 160, and bolts 170. The battery pack 100 may be a final product to be mounted in an application such as a vehicle.

The pack housing 110 may provide a space for mounting the battery cell assemblies 120 therein. The pack housing 110 may include a base plate 111 and side walls 112, 113, 114, and 115.

Here, two directions substantially parallel to a mounting surface 111M (i.e., a surface facing the battery cell assembly 120) of the base plate 111 are defined as an X-axis direction and a Y-axis direction, and a direction substantially perpendicular to an upper surface of the base plate 111 is defined as a Z-axis direction. The X-axis direction, the Y-axis direction, and the Z-axis direction may be substantially perpendicular to one another.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process.

According to embodiments, the base plate 111 and the side walls 112 and 113 may be coupled by friction stir welding. The base plate 111 may include a plurality of plates coupled to each other by friction stir welding.

The base plate 111 may include a plurality of cooling channels CH. The plurality of cooling channels CH may provide a passage for moving, for example, a refrigerant such as water. The plurality of cooling channels CH may be formed by the extrusion process. The plurality of cooling channels CH may extend in the X-axis direction. The plurality of cooling channels CH may be spaced apart from each other in the Y-axis direction. FIG. 3 illustrates the plurality of cooling channels CH having a circular cross section but is only an example and does not limit the technical idea of the present invention in any sense. Each of the plurality of cooling channels may have various shapes such as a rectangular shape, an elliptical shape, and the like.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

For example, the battery pack 100 may be of a moduleless type and each of the plurality of battery cell assemblies 120 may not include a module frame. As another example, the battery pack 100 may be of a module type and each of the plurality of battery cell assemblies 120 may include a module frame.

The plurality of battery cell assemblies 120 may be on the base plate 111. Each of the plurality of battery cell assemblies 120 may include a cell block 121 and cross-beams 125.

The cell block 121 may include a plurality of battery cells. The plurality of battery cells of the cell block 121 may form a plurality of banks. Each of the plurality of banks may include one or more battery cells connected in parallel. The plurality of banks may be connected in series to each other. The number of banks connected in series and the number of battery cells connected in parallel may be determined according to a voltage and a current to be output from each of the plurality of battery cell assemblies 120.

Here, the plurality of battery cells are basic units of a lithium ion battery, i.e., a secondary battery. Each of the plurality of battery cells includes an electrode assembly, an electrolyte, and a case. Each of the plurality of battery cells may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

The cross-beams 125 may be spaced apart from each other with the cell block 121 therebetween. The cross-beams 125 may have the same shape. The cross-beams 125 may be arranged symmetrically around the cell block 121. The cross-beams 125 may be provided by, for example, the extrusion process ut are not limited thereto.

The cross-beams 125 may include a stepped structure. The stepped structure of the cross-beams 125 may be used for coupling with the supporting beams 133 and 135. The cross-beams 125 may be coupled to the supporting beams 133 and 135 by a method such as bolting.

The TIM layers 143 may be provided on the base plate 111B of the pack housing 110. TIM layers 143 may be interposed between each of the plurality of battery cell assemblies 120 and the base plate 111. The TIM layers 143 may include a resin composition. The TIM layers 143 may be provided by a process of applying a thermal resin.

FIG. 3 illustrates that there are no TIM layers 143 on a central part of each of the plurality of battery cell assemblies 120 in the Y-axis direction and two TIM layers 143 correspond to each of the plurality of battery cell assemblies 120 (i.e., two TIM layers 143 overlap each of the plurality of battery cell assemblies 120 in the Z-axis direction), but is only an example and does not limit the technical idea of the present invention in any sense.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicone resin, a polyol resin, an epoxy resin, or an acrylic resin.

A curing agent of the resin composition may be selected according to the major component of the resin composition. For example, the curing agent may be a siloxane compound when the major component of the resin composition is a silicone resin, may be an isocyanate compound when the major component of the resin composition is a polyol resin, may be an amine compound when the major component of the resin composition is an epoxy resin, and may be an isocyanate compound when the major component of the resin composition is an acrylic resin.

An inorganic filler of the resin composition may have relatively high thermal conductivity. According to embodiments, the thermal conductivity of the inorganic filler of the resin composition may be about 1 W/mK or more. According to embodiments, the thermal conductivity of the inorganic filler of the resin composition may be about 5 W/mK or more. According to embodiments, the thermal conductivity of the inorganic filler of the resin composition may be about 10 W/mK or more. According to embodiments, the thermal conductivity of the inorganic filler of the resin composition may be about 15 W/mK or more.

According to embodiments, the inorganic filler of the resin composition may include ceramic. For example, the inorganic filler of the resin composition may include aluminum oxide (Al₂O₃), aluminum nitride (AlN), boron nitride (BN), silicon nitride (Si₃N₄), silicon carbide (SiC), beryllium oxide (BeO), zinc oxide (ZnO), aluminum hydroxide (Al(OH)₃), or boehmite. The resin composition may include a carbon filler. The resin composition may include, for example, fumed silica, clay, or calcium carbonate.

The tapes 141 may be interposed between the TIM layers 143 and the base plate 111. The tapes 141 may be in contact with each of the TIM layers 143 and the base plate 111. Thermal conductivity of each of the tapes 141 may be in a range of about 1 W/m·K to about 5 W/m·K. Each of the tapes 141 may include a stretchable material.

The tapes 141 may cover the base plate 111 and thus each of the TIM layers 143 may not be in contact with the base plate 111. Each of the TIM layers 143 may be spaced apart from the base plate 111.

The battery cell assemblies 120 may partially cover the tapes 141. The battery cell assemblies 120 may expose parts of the tapes 141. The tapes 141 may protrude in the Y-axis direction with respect to the battery cell assemblies 120. The tapes 141 may include a part between the battery cell assembly 120 and the side wall 112 or a part between the battery cell assembly 120 and the side wall 113.

The TIM layers 143 may partially cover the tapes 141. The TIM layers 143 may expose parts of the tapes 141. The tapes 141 may protrude in the Y-axis direction with respect to the TIM layers 143. The tapes 141 may include a part between the TIM layer 143 and the side wall 112 or a part between the TIM layer 143 and the side wall 113.

The center beam 131 may be interposed between the plurality of battery cell assemblies 120. The center beam 131 may extend in the X-axis direction. The center beam 131 may isolate the plurality of battery cell assemblies 120 in the Y-axis direction. According to embodiments, the center beam 131 may be provided separately from the base plate 111 and may be welded to the base plate 111. According to other embodiments, the center beam 131 may form an element integrally formed with the base plate 111.

The supporting beams 133 and 135 may be coupled to the base plate 111 by a method such as welding. The supporting beams 133 may be interposed between the supporting beams 135. The supporting beams 133 may be interposed between the battery cell assemblies 120. The supporting beams 135 may be interposed between the battery cell assemblies 120 and the side wall 114 or between the battery cell assemblies 120 and the side wall 115.

The supporting beams 133 may be in contact with two cross-beams 125, and the supporting beams 135 may be in contact with one cross-beam 125. Accordingly, a thickness of each of the supporting beams 133 may be different from a thickness of each of the supporting beams 135. Accordingly, the thickness of each of the supporting beams 133 may be greater than the thickness of each of the supporting beams 135.

In FIG. 1, an array of the plurality of battery cell assemblies 120 may be a 2x2 array. An array of the center beam 131, the supporting beams 133 and 135, and the plurality of battery cell assemblies 120 illustrated in FIG. 1 is a non-limiting example and does not limit the technical idea of the present invention in any sense. Those of ordinary skill in the art will be able to easily derive the plurality of battery cell assemblies 120 arranged in an MxN array (here, M and N are each an integer of 2 or more), based on the above description.

The lid 150 may be coupled to the pack housing 110. The lid 150 may be coupled to the side walls 112, 113, 114 and 115. The lid 50 may cover elements, such as the battery cell assemblies 120 and electronic components, inside the battery pack 100. The lid 150 may be fixed to the pack housing 110 by a mechanical coupling means such as bolting. The lid 150 may be fixed to the side walls 112, 113, 114, and 115 by mechanical coupling means such as bolting.

The lid 150 may include a ceiling part 151 and side walls 152 and 153. The ceiling part 151 may be spaced apart from the base plate 111 with the plurality of battery cell assemblies 120 interposed therebetween. The ceiling part 151 may be substantially parallel to the base plate 111. The side wall 152 may face the side wall 112, and the side wall 153 may face the side wall 113. Each of the side walls 152 and 153 of the lid 150 may be referred to as an upper side wall, and each of the side walls 112 and 113 of the pack housing 110 may be referred to as a lower side wall.

The gasket 160 may be interposed between the side walls 112, 113, 114, and 115 and the side walls 152 and 153. The gasket 160 may include, for example, a compressible material such as an ethylene-propylene diene monomer (EPDM). The gasket 160 may be pressed by the side walls 112, 113, 114, and 115 and the side walls 152 and 153 to provide a liquid seal of the pack housing 100.

The bolts 170 may fix the side walls 112 and 113 and the side walls 152 and 153. The bolts 170 may be fastened to the side walls 112 and 113 and the side walls 152 and 153. Each of the bolts 170 may include a flange and a shank. The flange of each of the bolts 170 may be in contact with the base plate 111.

A height of each of the side walls 112 and 113 may be less than a height of each of the battery cell assemblies 120. The height of each of the side walls 112 and 113 of the pack housing 110 may be different from a height of each of the side walls 152 and 153 of the lid 150. The height of each of the side walls 112 and 113 of the pack housing 110 may be less than the height of each of the side walls 152 and 153 of the lid 150. The sum of the height of each of the side walls 112 and 113 and the height of each of the side walls 152 and 153 of the lid 150 may be greater than the height of each of the battery cell assemblies 120.

The side wall 112 may include an inclined surface 112S, and the side wall 113 may include an inclined surface 113S. Each of the inclined surfaces 112S and 113S may be oblique to the mounting surface 111M of the base plate 111. Each of the inclined surfaces 112S and 113S may face the battery cell assemblies 120.

The battery pack 100 may further include exhaust devices coupled to the side walls 114 and 115 or the lid 150. The side walls 114 and 115 or the lid 150 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event of the plurality of battery cell assemblies 120 is a state in which a change of temperature of the plurality of battery cell assemblies 120 accelerates the change of temperature, i.e., uncontrollable positive feedback. The temperature of the plurality of battery cell assemblies 120 that are in a thermal runaway state sharply increases, and a large amount of a high-pressure gas and combustion debris are discharged.

The battery pack 100 may further include a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

### (Second Embodiment)

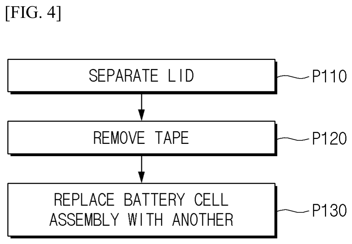

FIG. 4 is a diagram for describing a method according to embodiments.

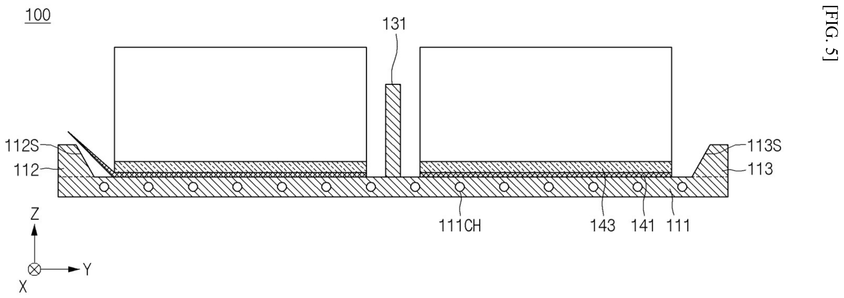

FIG. 5 is a cross-sectional view for describing a method according to embodiments.

Referring to FIGS. 3 to 5, in P110, the lid 150 may be separated from the pack housing 110.

Next, in P120, the tape 141 may be removed. In this process, a tape 141 overlapping a problematic battery cell assembly 120 in the Z-axis direction among the tapes 141 may be removed. The tape 141 may be removed by tension. The tape 141 may have sufficient tensile strength to not be broken while the tape 141 is removed. According to embodiments, because the height of the side walls 112 and 113 are sufficiently low and the side walls 112 and 113 include the inclined surfaces 112S and 113S, an angle between a tensile direction of the tape 141 and a main surface of the tape 141 (or the mounting surface 111M of the base plate 111) may be sufficiently small. Accordingly, it is possible to prevent the tape 141 from being broken while the tape 141 is being stretched.

Because the TIM layers 143 are cured in the assembly of the battery pack 100, there is no adhesion between the TIM layers 143 and the base plate 111 when the tape 141 is removed. Accordingly, in P130, the problematic battery cell assembly 120 may be replaced with a normal battery cell assembly.

### (Third Embodiment)

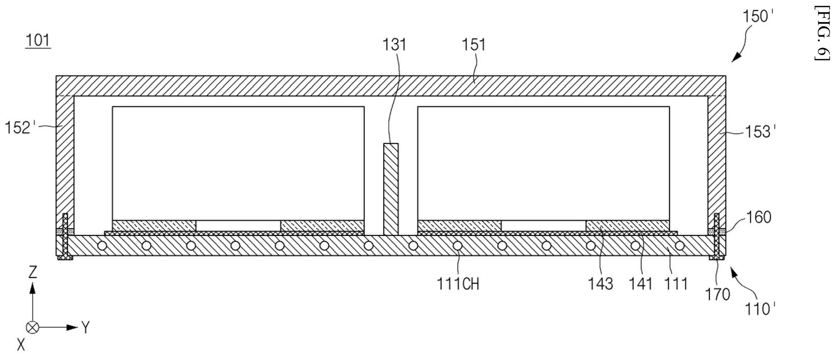

FIG. 6 is a cross-sectional view for describing a battery pack 101 according to other embodiments. More specifically, FIG. 6 illustrates a part corresponding to FIG. 3.

Referring to FIG. 6, the battery pack 101 may include a pack housing 110', a plurality of battery cell assemblies 120, a center beam 131, the supporting beams 133 and 135 (see FIG. 2), tapes 141, TIM layers 143, a lid 150', gaskets 160, and bolts 170. The battery pack 101 may be a final product to be mounted in an application such as a vehicle.

The plurality of battery cell assemblies 120, the center beam 131, the supporting beams 133 and 135 (see FIG. 2), the tapes 141, and the TIM layers 143 are substantially the same as those described above with reference to FIGS. 1 to 3, and thus redundant description thereof is omitted here.

The pack housing 110' may not include the side walls 112 and 113 (see FIG. 2). The lid 150' may include a ceiling part 151 and side walls 152' and 153', and the side walls 152' and 153' may be in contact with a base plate 111. A height of each of the side walls 152' and 153' may be greater than a height of each of the battery cell assemblies 120.

Each of the side walls 152' and 153' may face the base plate 111. The gasket 160 may be interposed between the side walls 152' and 153' and the base plate 111. The bolts 170 may fix the base plate 111 and the side walls 152' and 153' to one another. The bolts 170 may be fastened to the base plate 111 and the side walls 152' and 153'.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a pack housing including a base plate;
a battery cell assembly provided on the pack housing and including a plurality of battery cells;
a thermal interface material (TIM) layer between the battery cell assembly and the pack housing; and
a tape between the TIM layer and the pack housing.

2. The battery pack of claim 1, wherein the pack housing includes a lower side wall protruding from the base plate,
wherein a height of the lower side wall is less than a height of the battery cell assembly.

3. The battery pack of claim 2, wherein the lower side wall includes an inclined surface oblique to a mounting surface of the base plate.

4. The battery pack of claim 3, wherein the inclined surface faces the battery cell assembly.

5. The battery pack of claim 2, further comprising a lid plate covering the battery cell assembly,
wherein the lid plate includes an upper side wall facing the lower side wall.

6. The battery pack of claim 5, wherein a height of the upper side wall is greater than the height of the lower side wall.

7. The battery pack of claim 1, further comprising a lid plate covering the battery cell assembly,
wherein the lid plate includes an upper side wall facing the base plate.

8. The battery pack of claim 7, wherein a height of the upper side wall is less than a height of the battery cell assembly.

9. The battery pack of claim 1, wherein the tape covers the base plate.

10. The battery pack of claim 1, wherein the tape is in contact with each of the base plate and the TIM layer.

11. The battery pack of claim 1, wherein the TIM layer is spaced apart from the bae plate.

12. The battery pack of claim 1, wherein the battery cell assembly includes a cell block including a plurality of battery cells, and cross-beams spaced apart from each other with the cell block interposed therebetween.

13. The battery pack of claim 12, wherein the cross-beams are symmetrical to the cell block.

14. The battery pack of claim 12, wherein each of the cross-beams includes a stepped structure.
